# EUROPEAN PATENT SPECIFICATION

(11) **EP 0 789 995 B1**
(45) Date of publication and mention of the grant of the patent: **11.12.2002**
(21) Application number: 97200299.2
(22) Date of filing: 03.02.1997
(51) Int. Cl.: A01J 7/04, A01J 5/017

(54) **An implement for automatically milking animals**
Gerät zum automatischen Melken von Tieren
Dispositif de traite automatique d'animaux

(30) Priority: 13.02.1996 NL 1002319
(43) Date of publication of application: 20.08.1997
(73) Proprietor: MAASLAND N.V., 3155 PD Maasland (NL)
(72) Inventor: van den Berg, Karel, 2971 BR Bleskensgraaf (NL)
(74) Representative: Corten, Maurice Jean F.M.

(56) References cited:
- EP-A- 0 535 756
- NL-A- 9 201 734

## Description

The invention relates to an implement for automatically milking animals, comprising a milking robot, provided with one or more arms for carrying robot equipment, said robot equipment including teat cups, as well as a cleaning member for cleaning the teats of an animal.

Such an implement is known from Dutch patent application 9201734.

With the cleaning member described in said patent application the teats of the animal to be milked are cleaned by two cleaning rollers rotating in opposite directions of rotation, between which rollers a teat can be cleaned under the rubbing motion of the rollers. It might however be desirable to further improve such implement.

Therefore the invention aims at further improving such implement.

According to the invention the implement is characterized in that said cleaning member being connected with the arm of the robot arm construction via an arm, one end of said arm being pivotable about a vertical or almost vertical shaft and being pivotable about a substantially horizontal shaft.

For the purpose of being able to carry out maintenance work to the cleaning member, the latter is capable of being pivoted upwards about the horizontal shaft. With the aid of the electromotor the cleaning member can be pivoted from an inoperative position, to an operative position.

In accordance with a further embodiment of the invention the cleaning member is pivotably connected with an almost vertical shaft arranged on an outer arm of the robot arm construction. According to again an other preferred embodiment the cleaning member is connected via an arm with the vertical shaft. In order to prevent the arm from sagging, in accordance with a further preferred embodiment the arm is supported on a guide means disposed on the robot arm construction.

For the purpose of being able to clean the cleaning member or to repair same, according to an other embodiment of the invention the cleaning member is rotatable about an almost horizontal shaft located near a vertical shaft. In accordance with an other preferred embodiment the cleaning member is movable electrically or pneumatically from an inoperative position to an operative position. According to again an other embodiment of the invention, the cleaning member has a motor-driven cleaning element. In a preferred embodiment in accordance with the invention the cleaning element comprises two motor-driven profiled rollers disposed next to each other and at some distance from each other. In order to avoid that during cleaning of the teats dirt gets into the teat cups, according to an other inventive feature a cover plate is arranged under the cleaning member.

For the purpose of cleaning the cleaning element and/or moistening the teats, according to an inventive feature the cleaning member comprises a spraying device by means of which a cleaning and/or disinfecting fluid can be spread.

For a better understanding of the invention and to show how the same may be carried into effect, reference will now be made, by way of example, to the accompanying drawings, in which:
Figure 1 shows a side view of the implement according to the invention;
Figure 2 shows, in plan view, the implement shown in Figure 1 in a position in which the cleaning member is brought under an animal present in the milk box, and
Figure 3 shows more in detail the cleaning member represented in Figures 1 and 2.

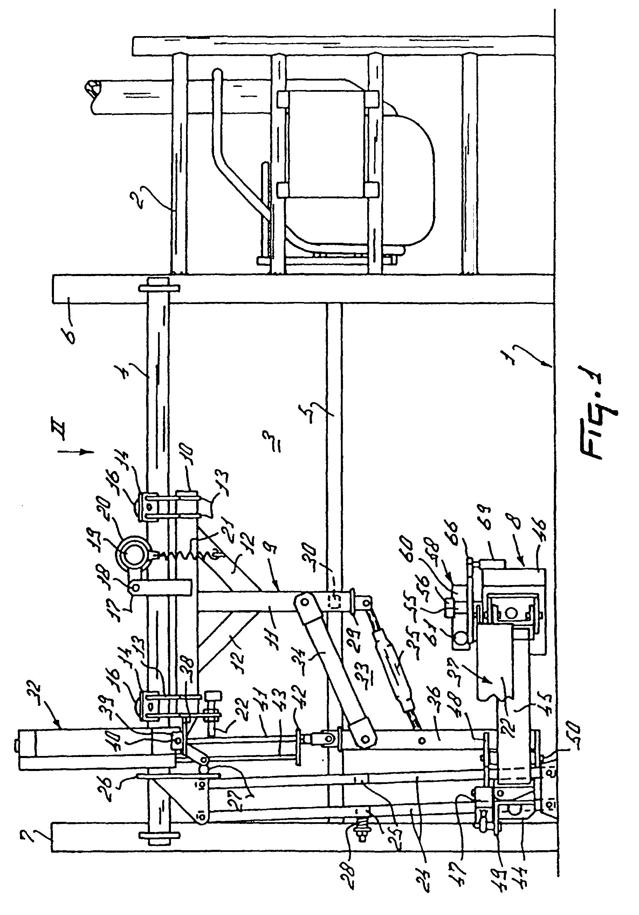

The implement as shown in Figures 1 and 2 comprises a milk box 1 surrounded by a fencing 2 allowing the animal a limited freedom of movement. The animal can enter the milk box via a longitudinal side near the rear thereof and leave same via the same longitudinal side near the front thereof. The front side of the milk box being provided with a feeding installation, the cow will advance sufficiently far and will come into a position in which she can be milked easily. At the other longitudinal side of the milk box, being opposite to the one including the entrance and exit, there is provided a fixed frame 3 constituting part of the fencing 2, which frame 3 includes a first frame part 4 and a second frame part 5. The first frame part 4 extends parallel to the second frame part 5 and is situated substantially thereabove. The first frame part 4 is fixed to the outside of two vertical stands 6 and 7 constituting part of the fencing 2, while the second frame part 5 is fixed therebetween. To the first frame part 4, there is movably attached a milking robot 8 for automatically milking animals, while this milking robot is supported against the second frame part 5 disposed at such a height that arms of the milking robot 8 are movable therebelow under the cow present in the milk box. The milking robot 8 comprises a carrier frame 9 for its further parts. By designing the upper frame part 4 as a rail, the carrier frame 9, and consequently the entire milking robot 8, can easily be moved along this frame part. The carrier frame 9 includes a beam 10 extending substantially parallel to the first frame part 4, a beam 11 directed vertically downwardly perpendicular to the beam 10 and fixed thereto, and two struts 12. Near the ends of the beam 10, there are provided pairs of supporting elements 13. To each pair of supporting elements 13, by means of supporting plates 14 fixed thereto, at an angle of approximately 45° there are provided two rollers 16, constituting a rollers pair 15, in such a way that the carrier frame 9 is suspended easily movably along the upper frame part 4, therebelow. On the beam 10 of the carrier frame 9, on both sides, there are provided two carriers 17, to which there is attached a motor 19 movable about a pivot shaft 18. By this motor 19 there is driven a roller 20, preferably having a rubber surface, which roller is pushed against the upper frame part 4 by means of a spring member 21. The spring member 21 being active between the motor 19 and the carrier frame 9, the roller 20 to be driven by the motor 19 is kept pushed against the upper frame part 4, so that, when the motor is driven, it will be moved along the upper frame part 4 and, consequently, the entire carrier frame 9 will be moved. To the supporting member 13 which, relative to the milk box, is situated rearmost, there is attached a sensor 22 comprising e.g. a laser. By means of this sensor 22, it is possible to guide the milking robot, in the longitudinal direction of the milk box, from an inoperative position to a starting position, in which the milking robot arms are moved under the animal present in the milk box, and to follow the movements of the animal in the longitudinal direction thereof. For that purpose, the sensor 22 cooperates with a supporting member 23 which is movable against the rear side of the animal. By means of a rod system which, in the present embodiment, is constituted by a quadrangle construction and, in particular, by a parallelogram construction 24, this supporting member 23 is arranged on the milk box floor pivotably relative thereto. By means of two rods 25, the supporting member 23 is provided with a plate 26, extending sidewards outside the frame parts 4, 5 which plate 26 is arranged so as to be able to reflect a signal transmitted by the sensor 22. After the sensor 22 has picked up the reflected signal, it will supply a control signal which is a measure for the actual, i.e. measured, distance between the plate 26 and the sensor 22, by means of which control signal the motor 19 can be operated, while the milking robot 8 is guided in the longitudinal direction of the milk box in such a way that the distance between the plate 26 and the sensor 22 is brought, respectively maintained, at an adjusted value. In its inoperative position, the milking robot 8 has been moved as rearwardly as possible relative to the frame parts 4 and 5, while pressing, by means of a contact element 27, against the plate 26 and thus keeping the supporting member 23 in its rearmost position. In other words, the supporting member 23 is locked by the milking robot 8 when the latter is in its inoperative position. When, in the longitudinal direction of the milk box, the milking robot is guided from this inoperative position to the starting position, in which its arms are moved under the animal present in the milk box, then the supporting member 23 is dislocked and, by means of a spring disposed between the parallelogram construction 24 and the fencing 2, is pushed under spring pressure against the rear side of the cow then present in the milk box. Upon a forward or backward movement of the cow, under pressure of the spring 28, the supporting member 23 will always be kept against the rear side of the animal, so that the position of the plate 26 determines that of the animal in the longitudinal direction of the milk box and, by means of the sensor 22, while maintaining the distance in longitudinal direction between the plate 26 and the sensor 22, the milking robot can follow the movements of the cow in the longitudinal direction of the milk box. In the present embodiment, the beam 11 of the carrier frame 9 extends vertically downwardly to somewhat below the second frame part 5. At the lower side of this beam 11, there is disposed a horizontal, rearwardly extending strip 29 which is provided with a freely rotatable roller element 30. The lower frame part 5 is constituted by a rail, in particular one designed as a U-shaped beam, while the freely rotatable roller element 30 is arranged in such a way that it is movable between the two upright edges of the U-shaped beam. In this manner, the milking robot 8 is supported against the lower frame part 5 and, when being moved by means of the motor over the first frame part 4, can easily move along the second frame part 5. Besides the carrier frame 9, the milking robot comprises a robot arm construction 31 which, by means of a control cylinder 32, is movable substantially vertically relative to the carrier frame 9. By means of a quadrangle construction 33, the robot arm construction 31 is movably connected with the carrier frame 9. In the embodiment shown, the upper arm 34 of this quadrangle construction 33 has a fixed length, while the lower arm 35 thereof is adjustable in length so as to enable the robot arm construction 31 to be adjusted to a limited extent. The robot arm construction 31 comprises a substantially vertical robot arm 36 as well as robot arms 37 that are movable in a substantially horizontal plane. By means of the quadrangle construction 33, the robot arm 36 is connected with the beam 11 of the carrier frame 9. The control cylinder 32 is active between the carrier frame 9 and the robot arm 36. As, by means of the lower arm 35 of the quadrangle construction 33, the orientation of the robot arm 36 is slightly adjustable, the spatial position of the action point of the control cylinder 32 at the robot arm 36 is not entirely fixed. For that reason, the housing of the control cylinder 32 is provided, at least pivotably to a limited extent, on a carrier plate 38 attached to the beam 10 of the carrier frame 9. On this carrier plate 38 there are disposed supports 39, wherebetween the housing of the control cylinder 32 is capable of being moved about a pivot shaft 40. In the present embodiment, the control cylinder is designed as a servo-pneumatic positioning cylinder. This means that, at the lower end of the piston rod 41, by means of a plate 42 fixed thereto, there is attached a position feedback rod 43, by means of which, in the part of the control cylinder, a potentiometer will deduce a signal indicating the position of the piston rod relative to the cylinder housing, while, with the aid of the signal supplied by the potentiometer, the position of the piston rod 41 relative to the cylinder housing can be post-guided to a preset position. Furthermore, the control cylinder 32 is provided with an overload protection enabling the robot arm construction 31 to be moved into its lowest position, as soon as the animal present in the milk box exercises a pressure thereon, e.g. by kicking.

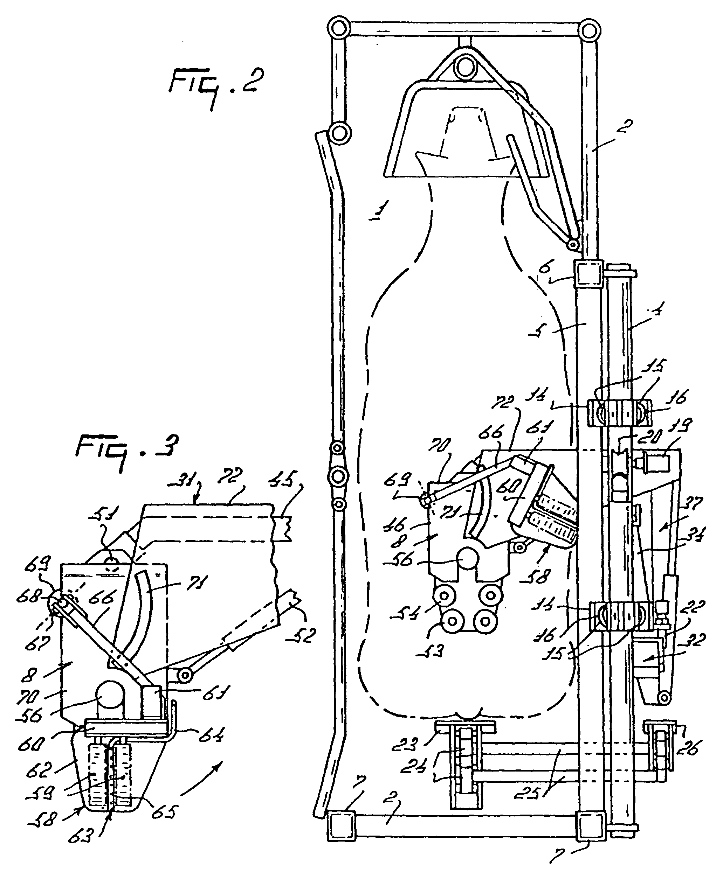

As shown in Figures 2 and 3, the milking robot includes arms 44, 45 and 46. The arms 44 and 45 are arranged at a fixed angle of 90° relative to each other. Therefore, the latter arms are moved together, i.e. by a control cylinder 47 provided between a supporting plate 48 attached to the robot arm 36 and a connecting piece 49 disposed between the two latter arms. The two arms 44 and 45 are pivotable about a substantially vertical pivot shaft 50 between the supporting plate 48 and a supporting plate 48', which latter is also rigidly connected to the robot arm 36, more in particular at the lower end thereof. The arm 46 is pivotable relative to the arm 45 about a substantially vertical pivot shaft 51 and is pivoted relative thereto by means of a control cylinder 52 which is disposed between the arm 46 and the end of the arm 45 that is situated near the connecting element 49. Near the end of the arm 46 there are provided the teat cups 53 and 54 to be connected to the teats of the cow (see Figure 1). Between the two teat cups 54 there is disposed a slide, which is movable on the arm 46 and on which there is provided a sensor 55, which by a sectorwise scanning movement can accurately determine the position of the teats, so that the control cylinders 32, 47 and 52 can be computer-controlled in such a way that the teat cups will be connected properly to the teats. The robot arms 44 - 46 having been brought to under the cow, they are in a relatively low position, in which the sensor 55 will not yet detect teats. By means of the control cylinder 32, the robot arms 44 - 46 are now raised stepwise until the sensor 55 detects one or more teats of the animal. When, during this upward movement, the robot arms 44 - 46 have been raised to such a height that the upper side of the sensor 55 pushes against the cow's abdomen, then, by means of a switch 56 provided on the upper side of the sensor 55, a downward movement of the robot arms can be effected, whereafter, by means of the sensor 55, while again stepwise raising the robot arms, the determination of the position of the teats can be repeated.

For the purpose of cleaning the teats of an animal to be milked, the above-described implement is furthermore provided with a cleaning member 58. The cleaning member 58 comprises two juxtaposed profiled rollers 59 whose shafts are pivotably bearing-supported in a gearbox 60. The profiled rollers 59 are driven by an electromotor 61 attached to a side of the gearbox 60. The gearbox (60) is mounted on a cover plate (62) extending to under the profiled roller (59). Between the profiled rollers (59) there is disposed a spraying device (63) by means of which the profiled rollers (59) and/or the teats of an animal to be milked can be cleaned. The spraying device (63) includes a line (64) via which the spraying fluid can be supplied. Between the profiled rollers (59) the line (64) is provided with a number of perforations (65) via which the spraying fluid can leave the line (61). The line (64) is provided on the cover plate (62). Via a striplike arm (66) the cleaning member (58) is connected with the arm (46) of the robot arm construction (31). One end of the arm (66) is fixedly connected with the cover plate (62) and the other end thereof is connected, pivotably about a substantially horizontal shaft (67) with a vertical shaft (68) of an electromotor (69). The electromotor (69) is disposed in a recess of a hood (70) of the arm (46).

For the purpose of being able to carry out maintenance work to the cleaning member (58), the latter is capable of being pivoted upwards about the horizontal shaft (67). With the aid of the electromotor (69) the cleaning member (58) can be pivoted from an inoperative position, as shown in Figure 2, to an operative position as indicated in Figure 3. In order to prevent the arm (66) from sagging, a curvelike guide strip (71) is disposed on the hood (70). The arm (66) rests permanently on the guide strip (71). In order to secure the cleaning member (58) both in the inoperative position and in the operative position, there are provided (non-shown) blocking means on the guide strip (71). In this manner it is avoided that the electromotor (69) has to be excited permanently.

On the further arm (45) of the robot arm construction (31) there is also provided a hood (72), whereabove the cleaning member (58) is located in its inoperative position. It is possible to dispose a boxlike housing on the hood (72) in which the cleaning member (58) can be stored in its inoperative position. This has the advantage that the cleaning member (58) is protected against contamination. In the boxlike housing there may be provided cleaning elements, such as brushes, by means of which the cleaning elements can be cleaned.

In order to avoid that, during cleaning of the teats, cleaning fluid supplied through the line (64) via the cover plate (62) gets into the teat cups (53, 54), the edges of the cover plate (62) may be provided with an upright portion and a discharge line for discharging the cleaning fluid.

Furthermore it will be obvious that the above-described embodiments of the cleaning member can be applied not only in combination with the implement for (automatically) milking animals, but also separately in such an implement.

## Claims

1. An implement for automatically milking animals, comprising a milking robot (8), provided with one or more arms for carrying robot equipment, said robot equipment including teat cups (53, 54), as well as a cleaning member (58) for cleaning the teats of an animal, said teat cups (53, 54) and said cleaning member (58) being connected with an arm (46) of the robot arm construction (31) of the milking robot (8), **characterized in that** said cleaning member (58) being connected with the arm (46) of the robot arm construction via an arm (66), one end of said arm (66) being pivotable about a vertical or almost vertical shaft (68) and being pivotable about a substantially horizontal shaft (67).

2. An implement as claimed in claim 1, **characterized in that** the arm (66) is supported on a guide means (71) disposed on the robot arm construction (31).

3. An implement as claimed in claim 2, **characterized in that** the horizontal shaft (67) is located near said vertical shaft (68).

4. An implement as claimed in any one of the preceding claims, **characterized in that** the cleaning member (58) is movable electrically or pneumatically from an inoperative position to an operative position.

5. An implement as claimed in any one of the preceding claims, **characterized in that** the cleaning member (58) comprises a motor-driven cleaning element.

6. An implement as claimed in any one of the preceding claims, **characterized in that** the cleaning element comprises two motor-driven profiled rollers (59) disposed next to each other and at some distance from each other.

7. An implement as claimed in any one of the preceding claims, **characterized in that** a cover plate (62) is arranged under the cleaning member (58).

8. An implement as claimed in any one of the preceding claims, **characterized in that** the cleaning member (58) comprises a spraying device (63), by means of which the cleaning element can be moistened.

## Patentansprüche

1. Vorrichtung zum automatischen Melken von Tieren mit einem Melkroboter (8), der mit einem oder mehreren Armen zum Tragen von Roboterausrüstung versehen ist, wobei die Roboterausrüstung Zitzenbecher (53, 54) sowie ein Reinigungsglied (58) zum Reinigen der Zitzen eines Tieres enthält, wobei die Zitzenbecher (53, 54) und das Reinigungsglied (58) mit einem Arm (46) der Roboterarm-Konstruktion (31) des Melkroboters (8) verbunden sind, **dadurch gekennzeichnet, daß** das Reinigungsglied (58) mit dem Arm (46) der Roboterarm-Konstruktion über einen Arm (66) verbunden ist, wobei ein Ende des Armes (66) um eine annähernd vertikale Achse (68) und um eine im wesentlichen horizontale Achse (67) schwenkbar ist.

2. Vorrichtung nach Anspruch 1,
**dadurch gekennzeichnet, daß** der Arm (66) an einer an der Roboterarm-Konstruktion (31) angebrachten Führungsvorrichtung (71) abgestützt ist.

3. Vorrichtung nach Anspruch 2,
**dadurch gekennzeichnet, daß** die horizontale Achse (67) nahe der vertikalen Achse (68) angeordnet ist.

4. Vorrichtung nach einem der vorhergehenden Ansprüche, **dadurch gekennzeichnet, daß** das Reinigungsglied (58) elektrisch oder pneumatisch aus einer Ruhelage in eine Arbeitslage bewegbar ist.

5. Vorrichtung nach einem der vorhergehenden Ansprüche, **dadurch gekennzeichnet, daß** das Reinigungsglied (58) ein motorisch angetriebenes Reinigungselement umfaßt.

6. Vorrichtung nach einem der vorhergehenden Ansprüche, **dadurch gekennzeichnet, daß** das Reinigungselement zwei motorisch angetriebene, profilierte Rollen (59) umfaßt, die nebeneinander und in einigem Abstand voneinander angeordnet sind.

7. Vorrichtung nach einem der vorhergehenden Ansprüche, **dadurch gekennzeichnet, daß** eine Abdeckplatte (62) unter dem Peinigungsglied (58) angeordnet ist.

8. Vorrichtung nach einem der vorhergehenden Ansprüche, **dadurch gekennzeichnet, daß** das Reinigungsglied (58) eine Sprühvorrichtung (63) umfaßt, mittels der das Reinigungselement angefeuchtet werden kann.

## Revendications

1. Dispositif pour traire automatiquement des animaux comprenant un robot de traite (8), pourvu d'un ou plusieurs bras pour supporter l'équipement robotisé, ledit équipement robotisé comprenant des gobelets trayeurs (53, 54), ainsi qu'un élément de nettoyage (58) pour nettoyer les trayons de l'animal, lesdits gobelets trayeurs (53, 54) et ledit élément de nettoyage (58) étant raccordés à un bras (46) de la construction à bras robotisé (31) du robot de traite (8), **caractérisé en ce que** ledit élément de nettoyage (58) est raccordé au bras (46) de la construction à bras robotisé par le biais d'un bras (66), une extrémité dudit bras (66) pouvant être pivoté autour d'un bras presque vertical (68) et pouvant être pivoté autour d'un bras sensiblement horizontal (67).

2. Dispositif selon la revendication 1, **caractérisé en ce que** le bras (66) est supporté sur des moyens de guidage (71) disposés sur la construction à bras robotisé (31).

3. Dispositif selon la revendication 2, **caractérisé en ce que** le bras horizontal (67) est situé près dudit arbre vertical (68).

4. Dispositif selon l'une quelconque des revendications précédentes, **caractérisé en ce que** l'élément de nettoyage (58) est mobile par voie électrique ou pneumatique depuis une position au repos à une position active.

5. Dispositif selon l'une quelconque des revendications précédentes, **caractérisé en ce que** l'élément de nettoyage (58) comprend un élément de nettoyage entraîné par moteur.

6. Dispositif selon l'une quelconque des revendications précédentes, **caractérisé en ce que** l'élément de nettoyage comprend deux rouleaux profilés entraînés par moteur (59) disposés proches l'un de l'autre et à une certaine distance l'un de l'autre.

7. Dispositif selon l'une quelconque des revendications précédentes, **caractérisé en ce qu'**une plaque de couverture (62) est agencée sous l'élément de nettoyage (58).

8. Dispositif selon l'une quelconque des revendications précédentes, **caractérisé en ce que** l'élément de nettoyage (58) comprend un dispositif de pulvérisation (63), au moyen duquel l'élément de nettoyage peut être mouillé.
